Europäisches Patentamt

European Patent Office

Office européen des brevets

(19)

(11) EP 0 598 648 B1

(12) FASCICULE DE BREVET EUROPEEN

(45) Date de publication et mention
de la délivrance du brevet:
**08.07.1998 Bulletin 1998/28**

(51) Int Cl.⁶: **G06K 11/08**, G06F 3/033

(21) Numéro de dépôt: **93402749.1**

(22) Date de dépôt: **09.11.1993**

(54) **Dispositif combiné de visualisation sur écran et de détection de position d'un repère par rapport à l'écran**

Kombinierte Vorrichtung zur Bildschirmanzeige und Lagebestimmung einer Markierung relativ zum Bildschirm

Apparatus integrating visualization on screen and detection of mark position in relation to the screen

(84) Etats contractants désignés:
**BE DE GB NL**

(30) Priorité: **19.11.1992 FR 9213900**

(43) Date de publication de la demande:
**25.05.1994 Bulletin 1994/21**

(73) Titulaire: **SEXTANT AVIONIQUE**
**92360 Meudon-la-Forêt (FR)**

(72) Inventeurs:
- **Barbier, Bruno, c/o THOMSON-CSF**
  **F-92402 Courbevoie Cedex (FR)**
- **Favot, Jean-Jacques, c/o THOMSON-CSF**
  **F-92402 Courbevoie Cedex (FR)**
- **Lach, Patrick, c/o THOMSON-CSF**
  **F-92402 Courbevoie Cedex (FR)**
- **Perbet, Jean-Noel, c/o THOMSON-CSF**
  **F-92402 Courbevoie Cedex (FR)**

(74) Mandataire: **Beylot, Jacques et al**
**THOMSON-CSF-S.C.P.I.,**
**13, Avenue du Président**
**Salvador Allende**
**94117 Arcueil Cédex (FR)**

(56) Documents cités:
EP-A- 0 199 526          EP-A- 0 484 160
EP-A- 0 515 015          GB-A- 2 206 203
US-A- 3 534 359

- **PATENT ABSTRACTS OF JAPAN vol. 16, no. 281**
  **(P-1375)23 Juin 1992 & JP-A-40 074 285**
  **(MEDAMA KIKAKU KK.)**

## Description

La présente invention concerne l'affichage par projection sur un écran d'une image gérée par un système informatique et l'introduction de données dans le système informatique par déplacement d'un repère par rapport à l'écran.

Les dispositifs de visualisation sur écran et les dispositifs d'introduction de données par déplacement d'un repère sur l'écran sont souvent associés en tant que périphériques d'un système informatique.

C'est ainsi que l'on connaît des stations de travail reliées à un système informatique, qui sont équipées d'une part d'un écran de visualisation et d'autre part d'un clavier alphanumérique avec souris, manette ou boule, ou d'un écran tactile. Les données issues du dispositif d'introduction de données sont traitées par le système informatique de manière à être affichées sous une forme particulière dans l'image visualisée afin de fournir à l'opérateur un contrôle visuel de la manipulation du dispositif d'introduction de données.

Les dispositifs d'introduction de données peuvent, pour la plupart, être classés en deux types selon la distance qui les sépare du dispositif de visualisation.

Dans un premier type, ils sont proches du dispositif de visualisation comme l'écran tactile qui est superposé à l'écran de visualisation. Ils présentent alors les inconvénients d'avoir une taille de même ordre de grandeur que l'image, de dégrader la qualité de l'image en occasionnant des reflets et une baisse de luminosité, et de ne pas être utilisables à distance de l'écran.

Dans un deuxième type, ils sont éloignés du dispositif de visualisation comme le sont un clavier alphanumérique, une souris, une manette ou une boule. Ils ont alors les inconvénients d'être encombrants, mécaniquement complexes et de nécessiter pour la transmission des données introduites une liaison qui est souvent une liaison électrique filaire. De plus, la donnée introduite ne dépend que de deux ou trois paramètres de positionnement tels que la position du doigt sur le plan du clavier alphanumérique, la position de la souris sur son plan d'évolution ou la position angulaire du manche d'une manette.

On en connaît également un troisième type dont un exemple est décrit dans la demande de brevet européen intercalaire EP 0 515 015. Dans celui-ci, le dispositif d'introduction de données est associé intimement au dispositif de visualisation polychrome qui est un système par projection sur un écran. Il consiste en un émetteur infrarouge projetant un marqueur infrarouge sur l'écran de projection et en un détecteur surfacique infrarouge placé devant l'objectif de projection du dispositif de visualisation, les rayonnements infrarouges étant séparés des rayonnements visibles du projecteur du dispositif de visualisation au moyen d'un miroir dichroïque intercalé devant l'objectif du projecteur.

Ce troisième type ne présente pas les inconvénients des deux autres. Il nécessite cependant d'ajouter, au système optique du projecteur du dispositif de visualisation, un miroir dichroïque, ce qui n'est pas toujours aisé, la place nécessaire pour cet ajout manquant souvent.

La présente invention a pour but de lutter contre les inconvénients précités et de réaliser un dispositif d'introduction de données actionné par un opérateur et combiné à un dispositif de visualisation qui satisfasse aux contraintes suivantes :

- être simple, léger et peu encombrant,
- pouvoir être utilisé soit à distance, soit à proximité de l'écran de visualisation,
- ne pas dégrader la qualité de l'image du dispositif de visualisation,
- ne nécessiter aucun dispositif de détection à proximité ou en périphérie de l'écran de visualisation,
- ne pas utiliser de liaison filaire avec le dispositif de visualisation.

Elle a pour objet un dispositif combiné de visualisation sur écran et de détection de position d'un repère par rapport à l'écran qui comporte :

- un système de visualisation par projection avec un dispositif de formation d'image polychrome opérant par superposition de trois images primaires aux couleurs fondamentales bleue, verte et rouge, et éclairant l'écran de projection, qui est transparent et au moins partiellement diffusant, par l'intermédiaire d'un objectif optique conjuguant l'image visible produite par le dispositif de formation d'image et l'écran de projection, ledit dispositif de formation d'image comportant trois valves optiques distinctes éclairées chacune par une lumière monochrome respectivement bleue, verte et rouge, et placées à une même distance de l'objectif optique sur des trajets optiques distinctes, un premier miroir dichroïque placé en regard des valves optiques dédiées aux composantes bleue et verte de l'image et réunissant leurs trajets optiques menant à l'objectif optique, et un deuxième miroir dichroïque placé devant l'objectif optique et réunissant le trajet optique de la composante rouge de l'image avec les trajets optiques commun des composantes bleue et vert de l'image provenant du premier miroir dichroïque,
- un émetteur infrarouge qui équipe le repère dont on veut détecter la position relative dans l'écran de projection et qui est constitué d'au moins une source infrarouge, ponctuelle et directive engendrant une tache infrarouge sur l'écran de projection,
- un dispositif séparateur de rayonnements visible et infrarouge par orientation dans deux directions différentes, intercalé devant l'objectif optique, du côté du dispositif de formation d'image, de manière que la lumière visible émise par le dispositif de formation d'image soit transmise à l'objectif optique et que la lumière infrarouge issue de l'objectif optique, qui est également transparent pour ce type de rayonnement, soit déviée en dehors du dispositif de formation d'image, et

- un détecteur surfacique de rayonnement infrarouge disposé à côté du dispositif de formation d'image, derrière le dispositif séparateur sur le chemin du rayonnement infrarouge en provenance de l'objectif optique de façon que ledit objectif optique, qui conjugue déjà dans un sens de transmission l'image visible produite par le dispositif de formation d'image et l'écran de projection, conjugue également, dans l'autre sens de transmission, l'image infrarouge produite par l'émetteur infrarouge sur l'écran de projection et le détecteur surfacique de rayonnement infrarouge,

et qui est remarquable en ce que le dispositif séparateur de rayonnements visible et infrarouge comporte un troisième miroir dichroïque intercalé entre la valve optique dédiée à la composante rouge de l'image et le deuxième miroir dichroïque réunissant le trajet de la composante rouge de l'image avec les trajets communs des composantes bleue et verte de l'image.

D'autres caractéristiques et avantages de l'invention ressortiront de la description d'un mode de réalisation donné à titre d'exemple. Cette description sera faite en regard du dessin dans lequel :

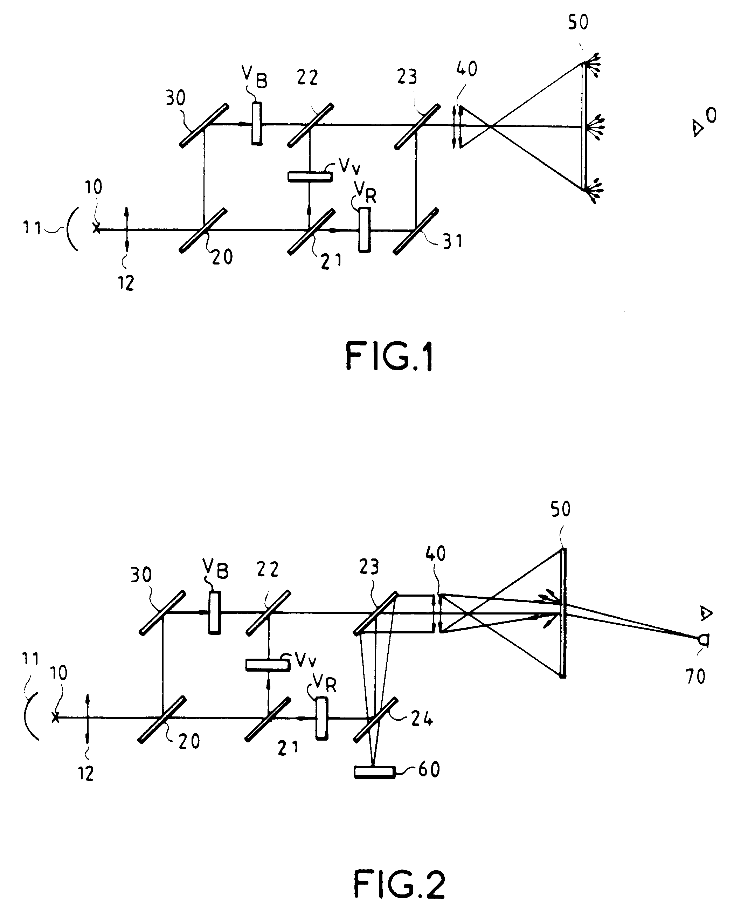

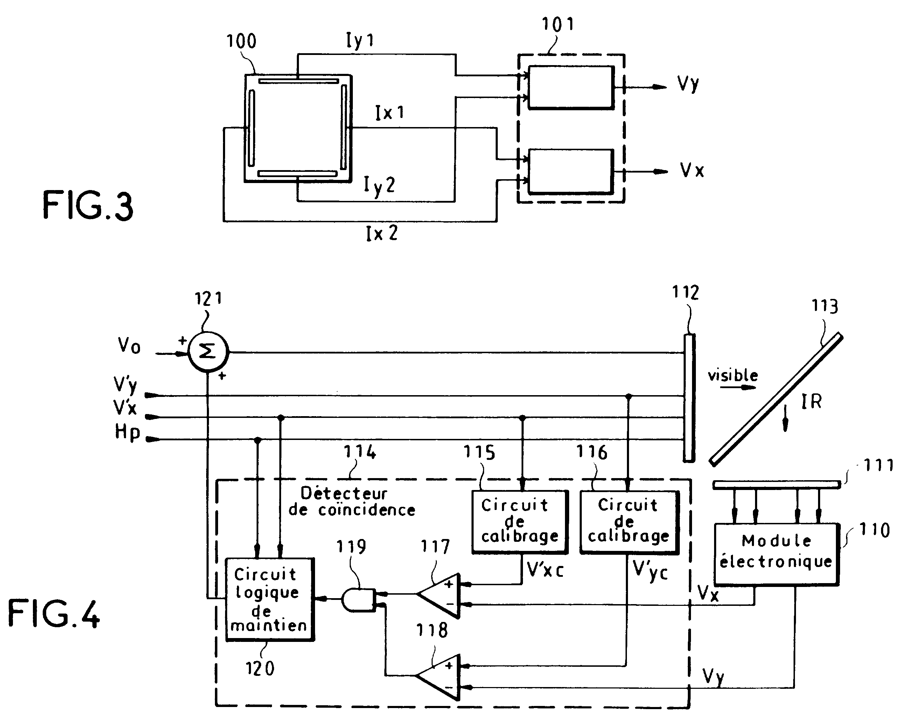

- une figure 1 illustre un schéma optique d'un dispositif de visualisation par projection sur écran de type connu ;
- une figure 2 illustre un schéma optique d'un dispositif combiné de visualisation par projection sur écran et de détection de position d'un repère par rapport à l'écran conforme à l'invention ;
- une figure 3 représente le schéma électrique d'un détecteur surfacique infrarouge utilisé dans le dispositif combiné de la figure 2 ; et
- une figure 4 représente un schéma de couplage électrique entre une valve optique et un détecteur surfacique infrarouge permettant de repérer par un index visible une tache infrarouge tracée sur l'écran de projection du dispositif combiné de visualisation de la figure 2.

Le dispositif de visualisation par projection sur écran d'une image en couleur vu à la figure 1 qui est de type connu, comporte essentiellement un dispositif de formation d'image éclairant un écran 50 par l'intermédiaire d'un objectif 40.

Le dispositif de formation d'image se compose d'une source de lumière blanche et d'un système de modulation dans lequel la lumière blanche de la source est décomposée en trois composantes fondamentales bleue, verte et rouge qui sont soumises à trois valves optiques distinctes $V_B$, $V_V$ et $V_R$ définissant individuellement les composantes bleue, verte et rouge d'une image et qui sont ensuite réunies pour former une image en couleur.

La source de lumière blanche 10 a son rayonnement rassemblé et collimaté en direction du système de modulation au moyen d'un réflecteur 11 et d'une optique 12. Elle peut être éventuellement complétée par un filtre arrêtant le rayonnement infrarouge pour limiter l'échauffement du système de modulation.

Le système de modulation est constitué des trois valves optiques distinctes $V_B$, $V_V$ et $V_R$ et d'un jeu de six miroirs simples ou dichroïques placés aux sommets et au milieu des longueurs d'un rectangle de façon à faire parcourir aux trois composantes fondamentales bleue, verte et rouge des trajets de même longueur.

Le rayonnement blanc de la source lumineuse 10 rencontre d'abord un miroir dichroïque 20 placé à 45 degrés réfléchissant le rayonnement bleu et se laissant traverser par les rayonnements vert et rouge de longueurs d'onde supérieures. Les rayonnements vert et rouge ayant traversé le miroir dichroïque 20 rencontrent ensuite un deuxième miroir dichroïque 21 également disposé à 45 degrés réfléchissant le rayonnement vert et laissant passer le rayonnement rouge. On obtient ainsi une décomposition de la lumière blanche de la source 10 en trois rayonnements colorés bleu, vert et rouge séparés.

Le rayonnement bleu engendré par réflexion sur le miroir dichroïque 20 est réfléchi par un miroir simple 30 placé à 45 degrés en direction de la valve optique $V_B$ qui est à cristal liquide et qui définit la composante bleue de l'image.

Le rayonnement vert engendré par réflexion sur le miroir dichroïque 21 traverse la valve optique $V_V$ qui est à cristal liquide et qui définit la composante verte de l'image.

Le rayonnement rouge engendré à la traversée du miroir dichroïque 21 traverse la valve optique $V_R$ qui est également à cristal liquide et qui définit la composante rouge de l'image.

Les composantes bleue et verte de l'image engendrées par les valves optiques $V_B$ et $V_V$ sont réunies à l'aide d'un miroir dichroïque 22 réfléchissant le rayonnement vert et laissant passer le rayonnement bleu de plus courte longueur d'onde.

La composante rouge de l'image engendrée par la valve optique $V_R$ est réfléchie par un miroir simple 31 placé à 45 degrés avant d'être réunie aux composantes bleue et verte de l'image par un miroir dichroïque 23 qui réfléchit le rayonnement rouge et laisse passer les rayonnements bleu et vert de plus courtes longueurs d'ondes.

Les trois composantes bleue, verte et rouge de l'image réunies en sortie du miroir dichroïque 23 traversent ensuite l'objectif 40 qui forme une image agrandie des trois valves optiques $V_B$, $V_V$ et $V_R$ placées à la même distance, sur l'écran de projection 50, conjuguant ainsi l'image en couleur produite par le dispositif de formation d'image et l'écran de projection 50.

L'écran de projection 50 qui est transparent et diffusant fonctionne en transmission et permet à un observateur placé en O de recevoir le rayonnement issu de tout point de l'image projetée alors que les rayons formant ce point sur l'écran n'ont pas, avant l'écran, la direction adéquate pour atteindre l'oeil de l'observateur.

Une amélioration connue de ce genre de dispositif de visualisation par projection sur écran consiste à rendre l'écran de projection partiellement diffusant et à lui adjoindre un verre de champ (type lentille de Fresnel) pour que l'image de la pupille de l'objectif se forme à l'emplacement de l'observateur. De la sorte, tous les rayons issus de l'objectif 40 participant à la formation d'un point de l'image sur l'écran sont dirigés vers l'observateur qui voit une image beaucoup plus brillante en raison du peu de diffusion de l'écran.

La figure 2 montre un dispositif de visualisation par projection sur écran du type précédent modifié afin de le combiner avec un système de détection de position d'un repère par rapport à l'écran. Dans cette figure, les éléments inchangés par rapport à la figure 1 ont conservé les mêmes indexations.

On profite du fait que l'objectif 40 se laisse également traverser par un rayonnement infrarouge pour l'utiliser pour conjuguer une image infrarouge produite sur l'écran avec un détecteur surfacique infrarouge placé à même distance que les valves optiques $V_B$, $V_V$ et $V_R$ sur un trajet propre au rayonnement infrarouge.

Pour ce faire, on remarque qu'un rayonnement infrarouge provenant de l'écran 50 à travers l'objectif 40 est réfléchi, en même temps que le rayonnement rouge par le miroir dichroïque 23 placé en sortie du dispositif de formation d'image puisque ce miroir dichroïque 23 ne se laisse traverser que par les longueurs d'ondes inférieures à celle du rouge. Le rayonnement infrarouge déjà séparé des rayonnements bleu et vert par le miroir dichroïque 23 n'a donc plus qu'à être séparé du rayonnement rouge ce qui se fait en remplaçant le miroir simple (31 figure 1) par un miroir dichroïque 24 qui réfléchit les rayonnements lumineux de longueurs d'onde inférieures ou égales à celle du rouge et qui se laisse traverser par les infrarouges.

On dispose alors un détecteur surfacique infrarouge 60, de dimensions comparables à celle d'une valve optique dans le prolongement des miroirs dichroïques 23, 24, à une même distance de l'objectif 40 que les valves optiques $V_B$, $V_V$ et $V_R$. Ainsi, l'objectif 40 qui conjugue déjà dans un sens de transmission l'image couleur produite au niveau des valves optiques $V_B$, $V_V$ et $V_R$, et l'écran de projection 50, conjugue également, dans l'autre sens de transmission une image infrarouge produite au niveau de l'écran de projection 50 et le détecteur surfacique infrarouge 60.

Le détecteur surfacique infrarouge 60 est avantageusement du type photodiode à effet latéral tel que, par exemple, le modèle référencé PIN-DLS 20 par la société United Detector Technology. Comme représenté à la figure 3, il se présente sous la forme d'une plaquette carrée photosensible 100 qui, associée à un module électronique 101, délivre deux signaux de repérage $V_x$ et $V_y$ dont les valeurs instantanées indépendantes du niveau d'éclairement sont proportionnelles à la position d'une tache lumineuse sur la surface sensible par rapport à deux directions perpendiculaires l'une x dite horizontale et l'autre y dite verticale.

La plaquette carrée photosensible 100 présente quatre électrodes périphériques délivrant quatre courants $Ix_1$, $Ix_2$, $Iy1$, $Iy_2$ dont la valeur instantanée dépend du niveau d'éclairement reçu et dont les disparités deux à deux $Ix_1$-$Ix_2$, $Iy_1$-$Iy_2$ dépendent de la répartition de l'éclairement selon les deux directions perpendiculaires x, y prédéfinies sur la surface sensible.

Le module électronique 101 engendre les signaux de repérage horizontal et vertical Vx et Vy à partir de la différence entre les courants instantanés relatifs à une même direction pondérée par leur somme :

$$Vx = \frac{Ix_1 - Ix_2}{Ix_1 + Ix_2} \qquad Vy = \frac{Iy_1 - Iy_2}{Iy_1 + Iy_2}$$

On associe au repère, pour détecter sa position par rapport à l'écran de projection 50 (figure 2) un émetteur infrarouge qui peut être constitué d'une ou plusieurs sources infrarouges ponctuelles directives engendrant des taches infrarouges sur l'écran de projection. Lorsque l'émetteur infrarouge est constitué d'une seule diode infrarouge à faisceau directif 70 (figure 2) manipulée par l'observateur, ce dernier peut tracer sur l'écran de projection 50 une tache infrarouge dont la position immédiatement repérée par le détecteur surfacique infrarouge 60 peut être marquée à l'aide d'un index visible affiché sur l'écran de projection 50 grâce par exemple au montage électronique de la figure 4.

Le montage électronique de la figure 4 illustre un mode d'interaction possible entre les signaux de repérage horizontal et vertical Vx et Vy du module électronique 110 du détecteur surfacique infrarouge 111 et le signal d'inscription d'image d'une valve optique 112 à cristal liquide engendrant l'une des composantes bleue, verte ou rouge de l'image affichée sur l'écran de projection. Le détecteur surfacique infrarouge 111 et la valve optique 112 qui sont tournés vers l'objectif sont séparés par un miroir dichroïque 113 assurant la séparation des rayonnements visible et infrarouge. La valve optique 112 présente une surface formée d'un ensemble de pixels juxtaposés , à transparence contrôlée électriquement, adressés un par un, par trames, à l'aide de signaux électriques logiques d'adressage horizontal V'x et vertical V'y associés à un signal d'horloge pixel Hp définissant le rythme d'adressage des pixels et à un signal vidéo Vo définissant la transparence du pixel adressé.

Un détecteur de coïncidence 114 permet de détecter l'instant où les coordonnées du pixel en cours d'adressage dans la procédure d'inscription de la composante d'image bleue, verte ou rouge sur la valve optique 112 coïncident avec celles de la tache infrarouge délivrées par le module électronique 110 du détecteur surfacique 111 pour forcer l'état de transparence de ce pixel et d'une zone connexe afin d'afficher un index brillant ou sombre, en contraste sur l'image, à l'endroit de l'écran de projection où se situe la tache infrarouge.

Ce détecteur de coïncidence 114 peut comporter, comme représenté, deux circuits de calibrage 115, 116, deux comparateurs 117, 118, une porte logique 119 et un circuit logique de maintien 120. Les deux circuits de calibrage 115, 116 reçoivent les signaux logiques d'adressage horizontal V'x et vertical V'y de la valve optique 112, les transforment en signaux analogiques de balayage de façon que leurs valeurs instantanées représentent la position du pixel adressé dont la transparence est donnée par la valeur instantanée du signal vidéo et les calibrent en amplitude de manière à leur donner des amplitudes globales de variation égales à celles des signaux de repérage horizontal Vx et vertical Vy du module électronique 110 du détecteur surfacique infrarouge 111. L'un des comparateurs 117 reçoit sur son entrée non inverseuse le signal de balayage horizontal calibré V'xc provenant du circuit de calibrage 115 et sur son entrée inverseuse le signal de repérage horizontal Vx provenant du module électronique 110, et délivre en sortie un signal logique passant à l'état 1 lorsque le signal de balayage horizontal calibré V'xc dépasse en amplitude le signal de repérage horizontal Vx. L'autre comparateur 118 reçoit sur son entrée non inverseuse le signal de balayage vertical calibré V'yc provenant du circuit de calibrage 116 et sur son entrée inverseuse le signal de repérage vertical Vy provenant du module électronique 110, et délivre en sortie un signal logique passant à l'état 1 lorsque le signal de balayage vertical calibré V'yc dépasse en amplitude le signal de repérage vertical Vy. La porte logique de type "et" 119 connectée en entrée aux sorties des deux comparateurs 117, 118 délivre en sortie une transition positive, passant du niveau logique 0 au niveau logique 1, lorsque les deux signaux de balayage calibrés V'xc et V'yc deviennent supérieurs en amplitude aux signaux de repérage Vx et Vy, c'est-à-dire à l'instant où les coordonnées du pixel en inscription de la valve optique 112 coïncident avec celles de la tache infrarouge sur l'écran de projection. Le circuit logique de maintien 120, à base de bascules, est déclenché par un front montant de la sortie de la porte logique 119 et maintenu actif sur la durée de quelques pixels et cela pendant plusieurs périodes du signal de balayage horizontal pour couvrir les instants d'inscription d'une zone de pixels centrée sur la tache infrarouge. Un sommateur 121 intercalé sur le trajet du signal vidéo Vo permet au circuit logique de maintien 120, lorsque ce dernier est activé, de forcer le signal vidéo à un niveau maximum ou minimum pour rendre opaque ou transparente une zone de pixels délimitant un index repérant la position sur l'écran de la tache infrarouge.

L'opérateur peut ainsi, grâce à l'index contrôler visuellement, en continu et sans retard, la position du repère qu'il déplace en bougeant la diode infrarouge 70 (figure 2) par exemple avec la main ou l'extrémité d'un doigt.

L'éloignement de la diode infrarouge de l'écran de projection agrandit la tache infrarouge sur l'écran et diminue sa densité mais ne diminue pas le niveau d'éclairement moyen du détecteur surfacique infrarouge et par conséquent le niveau des signaux fournis par le détecteur.

Le déplacement de la tache infrarouge et de l'index qui lui est superposé est essentiellement dû à un déplacement parallèle au plan de l'écran de la diode infrarouge lorsque celle-ci est proche de l'écran ou à un changement d'orientation de cette dernière lorsqu'elle est loin de l'écran. Ces deux modalités d'entrée de données, proche de l'écran ou à distance, sont disponibles en permanence pour l'observateur.

Bien entendu, le mode de création de l'index repérant la tache infrarouge sur l'écran de projection peut être différent de celui qui vient d'être décrit. D'une manière générale, les deux signaux de repérage Vx et Vy délivrés par le détecteur surfacique infrarouge sont appliqués au générateur électronique d'image du système de visualisation pour permettre à celui-ci d'engendrer dans l'image visible un symbole ou index dont la position, la taille, la couleur ou tout autre attribut est fonction de la position du centre de la tache infrarouge sur l'écran de projection.

Il est avantageux de moduler la puissance optique délivrée par la diode infrarouge en modulant son courant d'excitation pour diminuer les effets de perturbation produites sur le système par l'éclairement diurne diffus ou par l'éclairement direct du soleil sur l'écran de projection. En effet l'environnement lumineux ambiant peut produire sur l'écran de projection un éclairement infrarouge inhomogène entraînant un déséquilibre parasite entre les différents courants délivrés par le détecteur infrarouge qui s'ajoute au déséquilibre à mesurer produit par la tache infrarouge.

Grâce à cette modulation de la puissance optique de la diode infrarouge qui peut être une modulation sinusoïdale, on peut éliminer par filtrage, au niveau des courants $Ix_1$, $Ix_2$, $Iy_1$, $Iy_2$ fournis par le détecteur surfacique infrarouge ou au niveau des signaux de repérage Vx, Vy fournis par son module électronique, les composantes continues dues à l'éclairement ambiant.

Comme indiqué précédemment, l'écran de projection peut être partiellement diffusant et rendu directif par un verre de champ pour que l'image de la pupille de l'objectif se forme à l'emplacement de l'observateur et que ce dernier voit une image plus brillante. La diode infrarouge est alors utilisée de façon à être située dans la pupille de sortie du système de projection. De la sorte tous ses rayonnements infrarouges dirigés vers l'écran de projection atteignent le détecteur surfacique infrarouge. De plus, l'influence du rayonnement infrarouge ambiant sur le détecteur surfacique infrarouge est diminuée dans la mesure où seuls les rayonnements parasites issus de la pupille de sortie parviennent au détecteur. Or à cet emplacement se trouve l'observateur qui a plus tendance à faire obstacle au rayonnement parasite plutôt que de le rediffuser.

L'émetteur infrarouge peut comporter plusieurs diodes infrarouges à faisceaux ponctuels divergents dont les taches infrarouges sur l'écran de projection sont distinguées au niveau du détecteur au moyen d'une technique de multiplexage temporel ou fréquentiel. Les positions recueillies des différentes taches infrarouges sur l'écran de projection donnent alors des informations sur la position relative de l'émetteur infrarouge par rapport à l'écran de projection.

Par exemple, avec un émetteur formé de deux diodes infrarouges fixées à l'extrémité de l'index de l'observateur avec des directions de rayonnement légèrement divergentes orientées vers l'écran, on obtient deux taches infrarouges dont la distance relative renseigne sur la distance séparant l'index de l'observateur de l'écran. Cela permet de distinguer en plus de la région visée de l'écran les mouvements de rapprochement et d'éloignement de l'émetteur infrarouge qui peuvent être utilisés pour traduire un ordre de la part de l'observateur.

Avec trois diodes infrarouges à rayonnement ponctuel orientées de manière à avoir des directions de rayonnement concourantes en un même point, perpendiculaires entre elles deux à deux et visant l'écran de projection on constitue un repère trirectangle mobile dont la position et l'orientation par rapport à l'écran peut être déduite des positions des trois taches infrarouges engendrées sur l'écran. En effet, aux six degrés de liberté de positionnement du repère trirectangle mobile sont associées les six valeurs de paramètres que procure la mesure de position sur l'écran des trois taches infrarouges.

## Revendications

1. Dispositif combiné de visualisation sur écran et de détection de position d'un repère par rapport à l'écran comportant :

   - un système de visualisation par projection avec un dispositif de formation d'image polychrome opérant par superposition de trois images primaires aux couleurs fondamentales bleue, verte et rouge, et éclairant l'écran de projection (50), qui est transparent et au moins partiellement diffusant, par l'intermédiaire d'un objectif optique (40) conjuguant l'image visible produite par le dispositif de formation d'image et l'écran de projection (50), ledit dispositif de formation d'image comportant trois valves optiques ($V_B$, $V_V$, $V_R$) distinctes éclairées chacune par une lumière monochrome respectivement bleue, verte et rouge, et placées à une même distance de l'objectif optique (40) sur des trajets optiques distinctes, un premier miroir dichroïque (22) placé en regard des valves optiques ($V_B$, $V_V$) dédiées aux composantes bleue et verte de l'image et réunissant leurs trajets optiques menant à l'objectif optique (40), et un deuxième miroir dichroïque (23) placé devant l'objectif optique (40) et réunissant le trajet optique de la composante rouge de l'image avec les trajets optiques commun des composantes bleue et vert de l'image provenant du premier miroir dichroïque,

   - un émetteur infrarouge qui équipe le repère dont on veut détecter la position relative dans l'écran de projection (50) et qui est constitué d'au moins une source infrarouge, ponctuelle et directive (70) engendrant une tache infrarouge sur l'écran de projection (50),

   - un dispositif (24) séparateur de rayonnements visible et infrarouge par orientation dans deux directions différentes, intercalé devant l'objectif optique (40), du côté du dispositif de formation d'image, de manière que la lumière visible émise par le dispositif de formation d'image soit transmise à l'objectif optique (40) et que la lumière infrarouge issue de l'objectif optique (40), qui est également transparent pour ce type de rayonnement, soit déviée en dehors du dispositif de formation d'image, et

   - un détecteur surfacique de rayonnement infrarouge (60) disposé à côté du dispositif de formation d'image, derrière le dispositif séparateur (24) sur le chemin du rayonnement infrarouge en provenance de l'objectif optique (40) de façon que ledit objectif optique (40), qui conjugue déjà dans un sens de transmission l'image visible produite par le dispositif de formation d'image et l'écran de projection (50), conjugue également, dans l'autre sens de transmission, l'image infrarouge produite par l'émetteur infrarouge (70) sur l'écran de projection (50) et le détecteur surfacique de rayonnement infrarouge (60),

   - le dispositif séparateur de rayonnements visible et infrarouge comporte un troisième miroir dichroïque (24) intercalé entre la valve optique ($V_R$) dédiée à la composante rouge de l'image et le deuxième miroir dichroïque (23) réunissant le trajet de la composante rouge de l'image avec les trajets communs des composantes bleue et verte de l'image.

2. Dispositif selon la revendication 1, caractérisé en ce que le détecteur surfacique de rayonnement infrarouge (60) est du type photodiode à effet latéral.

3. Dispositif selon la revendication 1, avec un dispositif de formation d'image dans lequel les valves optiques ($V_B$, $V_V$ ou $V_R$) ont une surface sensible formée d'un ensemble de pixels juxtaposés, à transparence contrôlée électriquement, adressés à l'aide de signaux électriques d'adressage horizontal et vertical V'x, V'y associés à un signal d'horloge pixel Hp définissant le rythme de scrutation des pixels et à un signal vidéo Vo définissant la transparence du pixel scruté, caractérisé en ce qu'il comporte en outre un générateur d'index repérant la position du repère dans l'image projetée sur l'écran.

4. Dispositif selon la revendication 3, caractérisé en ce que ledit générateur d'index comporte un détecteur de coïncidence (114) détectant l'instant où les coordonnées du pixel en cours de balayage dans la procédure d'inscription de la valve optique coïncident avec celles du repère délivrées par le détecteur surfacique de rayonnement infrarouge (110, 111) et un sommateur (121) intercalé sur le trajet du signal vidéo permettant au détecteur de coïncidence (114) de forcer le signal vidéo Vo à un niveau assurant la surimpression d'un index sur l'image visible.

5. Dispositif selon la revendication 1, caractérisé en ce que ledit émetteur infrarouge est constitué d'une diode infrarouge (70) à rayonnement ponctuel directif engendrant sur l'écran de projection (50) une tache infrarouge constituant un repère dont la position est détectée par le détecteur surfacique de rayonnement infrarouge (60).

6. Dispositif selon la revendication 5, caractérisé en ce que ladite diode infrarouge (70) a un rayonnement modulé en intensité de manière à pouvoir le distinguer du rayonnement infrarouge ambiant.

7. Dispositif selon la revendication 1, caractérisé en ce que ledit émetteur infrarouge est constitué de plusieurs diodes infrarouges à rayonnements ponctuels directifs interceptant l'écran de projection (50) multiplexées dans le temps.

**Patentansprüche**

1. Kombinierte Vorrichtung zur Bildschirmanzeige und Lagebestimmung einer Markierung relativ zum Bilschirm, die folgendes aufweist:

   - ein Projektionsanzeigesystem mit einer Einrichtung zum Formen eines polychromen Bildes, die mit Übereinanderlagerung von drei Primärbildern mit den Grundfarben blau, grün und rot arbeitet und den Projektionsschirm (50), der transparent oder wenigstens teilweise diffundierend ist, über ein optisches Objektiv (40) beleuchtet, das das von der Bildformeinrichtung und dem Projektionsschirm (50) erzeugte sichtbare Bild konjugiert, wobei die Bildformeinrichtung drei getrennte optische Ventile ($V_B$, $V_V$, $V_R$), von denen jeweils eines durch ein monochromes blaues, grünes bzw. rotes Licht beleuchtet wird und die auf verschiedenen optischen Pfaden im gleichen Abstand von dem optischen Objektiv (40) angeordnet sind, einen ersten dichroitischen Spiegel (22), der gegenüber den optischen Ventilen ($V_B$, $V_V$) angeordnet ist, die den blauen und grünen Komponenten des Bildes gewidmet sind, und ihre zum optischen Objektiv (40) führenden optischen Pfade vereinigt, sowie einen zweiten dichroitischen Spiegel (23) aufweist, der vor dem optischen Objektiv (40) angeordnet ist und den optischen Pfad der roten Komponente des Bildes mit den gemeinsamen optischen Bahnen der blauen und der grünen Komponente des Bildes vereinigt, die von dem ersten dichroitischen Spiegel stammen,

   - einen Infrarotsender, der die Markierung liefert, deren relative Position in dem Projektionsschirm (50) erfaßt werden soll, und der aus wenigstens einer punktförmigen und gerichteten Infrarotquelle (70) gebildet ist, die einen Infrarotfleck auf dem Projektionsschirm (50) erzeugt,

   - eine Einrichtung (24) zum Trennen der sichtbaren Strahlung und der Infrarotstrahlung durch Orientierung in zwei unterschiedlichen Richtungen, die vor dem optischen Objektiv (40) auf der Seite der Bildformeinrichtung derart angeordnet ist, daß das von der Bildformeinrichtung emittierte sichtbare Licht zu dem optischen Objektiv (40) übertragen wird und das von dem ebenfalls für diesen Strahlungstyp transparenten optischen Objektiv (40) abgegebene Infrarotlicht nach außerhalb der Bildformeinrichtung abgelenkt wird, sowie

   - einen Flächendetektor (60) für Infrarotstrahlung, der neben der Bildformeinrichtung hinter der Trenneinrichtung (24) auf dem Pfad der aus dem optischen Objektiv (40) kommenden Infrarotstrahlung derart angeordnet ist, daß das optische Objektiv (40), das bereits in einer Übertragungsrichtung das von der Bildformeinrichtung und dem Projektionsschirm (50) erzeugte sichtbare Bild konjugiert, auch in der anderen Übertragungsrichtung das von dem Infrarotsender (70) auf dem Projektionsschirm (50) und dem Flächendetektor (60) für Infrarotstrahlung erzeugte Bild konjugiert,

   - wobei die Einrichtung zum Trennen der sichtbaren und der Infrarotstrahlung einen dritten dichroitischen Spiegel (24) aufweist, der zwischen dem optischen Ventil ($V_R$), das der roten Komponente des Bildes gewidmet ist, und dem zweiten dichroitischen Spiegel (23) angeordnet ist, der die Bahn der roten Komponente des Bildes mit den gemeinsamen Bahnen der blauen und der grünen Komponente des Bildes vereinigen.

2. Vorrichtung nach Anspruch 1, dadurch gekennzeichnet, daß der Flächendetektor (60) für Infrarotstrahlung vom Typ einer Photodiode mit Lateraleffekt ist.

3. Vorrichtung nach Anspruch 1, mit einer Bildformeinrichtung, bei der die optischen Ventile ($V_B$, $V_V$ oder $V_R$) eine aus einer Gruppe von nebeneinander angeordneten Pixeln gebildete, empfindliche Oberfläche mit elektrisch kontrollierter Transparenz besitzen, die mit Hilfe elektrischer Signale V'x, V'y zur horizontalen und vertikalen Adressierung adressiert werden, die einem Pixeltaktsignal Hp, das den Abfragerhythmus der Pixel definiert, sowie einem Videosignal Vo zugeordnet sind, das die Transparenz des abgefragten Pixels definiert, dadurch gekennzeichnet, daß sie außerdem einen Indexgenerator aufweist, der die Position der Markierung in dem auf den Bildschirm projizierten Bild markiert.

4. Vorrichtung nach Anspruch 3, dadurch gekennzeichnet, daß der Indexgenerator einen Koinzidenzdetektor (114) aufweist, der den Zeitpunkt erfaßt, zu dem sich die Koordinaten des bei dem Einschreibvorgang des optischen Ventils gerade abgetasteten Pixels mit denjenigen der Markierung decken, die von dem Flächendetektor (110, 111) für Infrarotstrahlung abgegeben werden, sowie einen Summierer (121), der auf der Bahn des Videosignals angeordnet ist und es dem Koinzidenzdetektor (114) ermöglicht, das Videosignal Vo auf einen Pegel zu zwingen, der die Überlagerung des sichtbaren Bildes mit einem Index ermöglicht.

5. Vorrichtung nach Anspruch 1, dadurch gekennzeichnet, daß der Infrarotsender aus einer Infrarotdiode (70) mit punktförmiger, gerichteter Strahlung besteht, die auf dem Projektionsschirm (50) einen Infrarotfleck erzeugt, der eine Markierung bildet, deren Position von dem Flächendetektor (60) für Infrarotstrahlung erfaßt wird.

6. Vorrichtung nach Anspruch 5, dadurch gekennzeichnet, daß die Infrarotdiode (70) eine derart in der Intensität modulierte Strahlung besitzt, daß sie von der Umgebungsinfrarotstrahlung unterschieden werden kann.

7. Vorrichtung nach Anspruch 1, dadurch gekennzeichnet, daß der Infrarotsender aus mehreren Infrarotdioden mit punktförmigen, gerichteten Strahlungen besteht, die den Projektionsschirm (50) im Zeitmultiplex treffen.

## Claims

1. Combined device for screen display and for the detection of the position of a location marker with respect to the screen comprising:

- a system of display by projection with a polychrome image-forming device operating by superimposing three primary images on the blue, green and red fundamental colours, and illuminating the projection screen (50), which is transparent and at least partially scattering, by means of an optical objective (40) conjugating the visible image produced by the image-forming device and the projection screen (50), the said image-forming device comprising three separate optical valves ($V_B$, $V_G$, $V_R$) each illuminated by a monochrome light respectively blue, green and red and situated at a same distance from the optical objective (40) on separate optical paths, a first dichroic mirror (22) facing the optical valves ($V_B$, $V_G$) dedicated to the blue and green components of the image and bringing together their optical paths leading to the optical objective (40), and a second dichroic mirror (23) placed in front of the optical objective (40) and bringing together the optical path of the red component of the image with the common optical paths of the blue and green components of the image originating from the first dichroic mirror,

- an infrared emitter fitted to the location marker whose relative position in the projection screen (50) is to be detected, and which is constituted by at least one directional, point infrared source (70) giving rise to an infrared spot on the projection screen (50),

- a device (24) for the separation of visible and infrared radiations by orientation in two different directions, interposed in front of the optical objective (40), on the side of the image-forming device, in such a way that the visible light emitted by the image-forming device is transmitted to the optical objective (40) and the infrared light coming from the optical objective (40), which is also transparent for this type of radiation, is diverted away from the image-forming device, and

- a surface detector of infrared radiation (60) that is positioned beside the image-forming device, behind the separator device (24) on the path of the infrared radiation coming from the optical objective (40) so that the said optical objective (40), which, already in one direction of transmission, conjugates the visible image produced by the image-forming device and the projection screen (50), also conjugates, in the other direction of transmission, the infrared image produced by the infrared emitter (70) on the projection screen (50) and the surface detector of infrared radiation (60),

- the separator device of visible and infrared radiations comprises a third dichroic mirror (24) interposed between the optical valve ($V_R$) dedicated to the red component of the image and the second dichroic mirror (23) bringing together the path of the red component of the image with the common paths of the blue and green components of the image.

2. Device according to Claim 1, characterized in that the surface detector of infrared radiation (60) is of the lateral-effect photodiode type.

3. Device according to Claim 1, with an image-forming device in which the optical valves ($V_B$, $V_G$ or $V_R$) have a sensitive surface formed by a set of juxtaposed pixels, with electrically controlled transparency, addressed with the aid of horizontal and vertical addressing electrical signals V'x, V'y associated with a pixel clock signal Hp defining the rate of examination of the pixels and with a video signal Vo defining the transparency of the examined pixel, characterized in that it further comprises a pointer generator localizing the position of the location marker in the image projected on the screen.

4. Device according to Claim 3, characterized in that the said pointer generator comprises a coincidence detector (114) detecting the instant at which coordinates of the pixel being scanned in the optical valve recording procedure coincide with those of the location marker which are delivered by the surface detector of infrared radiation (110, 111) and a summator (121) interposed on the path of the video signal enabling the coincidence detector (114) to force the video signal Vo to a level ensuring that a pointer is overprinted on the visible image.

5. Device according to Claim 1, characterized in that the said infrared emitter is constituted by an infrared diode (70) with directional point radiation giving rise on the projection screen (50) to an infrared spot constituting a location marker whose position is detected by the surface detector of infrared radiation (60).

6. Device according to Claim 5, characterized in that the said infrared diode (70) has a radiation modulated in intensity so that it can be distinguished from the ambient infrared radiation.

7. Device according to Claim 1, characterized in that the said infrared emitter is constituted by several infrared diodes with directional, point radiations intercepting the projection screen (50) and time-division multiplexed.

## FIG.1

## FIG.2

FIG.3

FIG.4

EP 0 598 648 B1